(19) **Europäisches Patentamt / European Patent Office / Office européen des brevets**

(11) **EP 4 660 333 A1**

(12) # EUROPEAN PATENT APPLICATION

(43) Date of publication:
**10.12.2025   Bulletin 2025/50**

(21) Application number: **25180260.9**

(22) Date of filing: **02.06.2025**

(51) International Patent Classification (IPC):
**C22B 3/42** $^{(2006.01)}$  **C22B 7/00** $^{(2006.01)}$
**C22B 59/00** $^{(2006.01)}$  **B01J 45/00** $^{(2006.01)}$
**C02F 101/20** $^{(2006.01)}$  **C02F 1/56** $^{(2023.01)}$
**C02F 101/10** $^{(2006.01)}$

(52) Cooperative Patent Classification (CPC):
**C22B 59/00; C02F 1/56; C22B 3/42; C22B 7/008;**
B01J 45/00; C02F 2101/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.06.2024   FR 2405773**

(71) Applicant: **SNF SA
42160 Andrezieux-Bouthéon (FR)**

(72) Inventors:
• **KIEFFER, Johann**
  **42160 ANDRÉZIEUX-BOUTHÉON (FR)**
• **ROUX, Christophe**
  **42160 ANDRÉZIEUX-BOUTHÉON (FR)**
• **BATONNIER, Vincent**
  **42160 ANDRÉZIEUX-BOUTHÉON (FR)**

(74) Representative: **Plasseraud IP
104 Rue de Richelieu
CS92104
75080 Paris Cedex 02 (FR)**

(54) ## PROCESS FOR SEPARATING RARE-EARTH METALS IN ADMIXTURE IN AQUEOUS SOLUTION

(57)   The invention relates to a process for separating one or more elements among the rare-earth elements from other metals in columns 4 to 14 of the Periodic Table of the Elements, in admixture in aqueous solution. The process uses a polyethyleneimine-CS2 adduct in the form of a salt.

[FIG 1]

EP 4 660 333 A1

**Description**

**FIELD OF THE INVENTION**

The present invention relates to a process for separating rare-earth metals in admixture with other metals in aqueous solution.

**PRIOR ART**

The rare-earth metals are formed of 17 elements: 15 lanthanides: lanthanum; cerium; praseodymium; neodymium; promethium; samarium; europium; gadolinium; terbium; dysprosium; holmium; erbium; thulium; ytterbium and lutetium, and also scandium and yttrium. The light rare-earth metals are used for their exceptional magnetic properties, and the heavy rare-earth metals (those with the greatest value) are used to push back the temperature point at which magnets lose their magnetism.

They are ubiquitous, especially in four industrial sectors that represent 10% of the global economy: digital (cell phones, hard disks, screens); energy (offshore wind turbines, electric and hybrid car engines); medical (apparatus, robots); weapons.

Their uses are diversified: the first (31%) being permanent magnets (used in generators, flywheels, alternators, toy and watch motors); catalysts (18%) (used in catalytic converters in cars); metallurgical alloys (18%) (used in aeronautical, military and medical construction, etc.); polishing (13%) (used on the surface of many industrial products); glass and ceramics (11%); the remainder representing 9%.

Permanent magnets are enjoying unbridled growth. Wind power and low-carbon mobility consume 35% of the global market thereof, with China accounting for 91% of production. Their strong growth (consumption will triple by 2030 for wind power, and will increase tenfold for electric vehicles) may come up against a limited supply of rare-earth metals.

With a view to promoting the transition to a circular economy (sharing, reusing, repairing, renovating and recycling existing products and materials for as long as possible, so that they retain their value), and to ensuring the availability of virtuous products, the recovery of these rare-earth metals is a major goal for the coming years (battery recycling).

Separating rare-earth metals from the metals in Groups 4 to 14 of the Periodic Table of the Elements is a challenge for the coming years.

**DISCLOSURE OF THE INVENTION**

The Applicant has found and developed a simple, low-cost process which allows the separation of rare-earth metals in admixture with other metals in aqueous solution.

More precisely, the invention is a process for separating one or more elements among the rare-earth elements from other metals of columns 4 to 14 of the Periodic Table of the Elements, in admixture in aqueous solution **AS,** said process comprising at least the following successive steps:

a) adding at least one polyethyleneimine-CS2 adduct in the form of a salt (PEI-CS2) to the aqueous solution **AS;**
b) stirring the aqueous solution obtained in step a) for at least 1 minute;
c) stopping the stirring and waiting at least 5 minutes for a suspension **S** to form;
d) performing a liquid/solid separation on the suspension **S** to obtain an aqueous solution **L** predominantly containing the elements among the rare-earth elements initially present in the aqueous solution **AS.**

The solution **AS** subjected to the process of the invention contains at least 1 element from among the 17 rare-earth metals, said rare-earth metals comprising 15 lanthanides: lanthanum; cerium; praseodymium; neodymium; promethium; samarium; europium; gadolinium; terbium; dysprosium; holmium; erbium; thulium; ytterbium and lutetium, and also scandium and yttrium.

Advantageously, the rare-earth metals in the solution **AS** are chosen from the following elements: neodymium, dysprosium, lanthanum, gadolinium, europium, yttrium, cerium and samarium.

According to a preferred embodiment of the invention, the solution **AS** contains at least two elements among the rare-earth elements.

Notably, the total concentration of elements among the rare-earth elements initially present in the solution **AS** ranges from 1 to 10 000 ppm by weight.

The solution **AS** also comprises at least one other metal from columns 4 to 14 of the Periodic Table of the Elements. The metals from columns 4 to 14 of the Periodic Table are preferentially iron, copper, chromium, manganese, cobalt, nickel, zinc, cadmium, mercury, tin, lead, vanadium, aluminium, gallium, selenium and molybdenum.

The "Periodic Table of the Elements" refers to Mendeleyev's table (updated IUPAC 2016).

In particular, the total concentration of other metals from columns 4 to 14 of the Periodic Table of the Elements, initially present in the solution **AS,** ranges from 1 to 10 000 ppm by weight.

The term "a polyethyleneimine-CS2 adduct" means a product resulting from the reaction of a polyethyleneimine with carbon disulfide.

In particular, the reaction may be performed in the presence of a base, affording the polyethyleneimine-CS2 adduct directly in the form of a salt. For example, the reaction may be performed in the presence of sodium hydroxide (NaOH), or potassium hydroxide (KOH), to obtain the polyethyleneimine-CS2 adduct in the form of a salt (PEI-CS2), respectively in the form of the sodium or potassium salt.

Preferentially, the polyethyleneimine from which the polyethyleneimine-CS2 adduct in the form of the salt used in step a) of the process of the invention originates contains between 15% and 65% primary amine functions, between 25% and 60% secondary amine functions and between 10% and 60% tertiary amine functions. More preferentially, the polyethyleneimine contains between 25% and 45% primary amine functions, between 35% and 55% secondary amine functions and between 20% and 40% tertiary amine functions.

Advantageously, the polyethyleneimine from which the polyethyleneimine-CS2 adduct in the form of a salt used in step a) of the process of the invention originates has a molecular weight of between 300 and 70 000 daltons.

The salt of the polyethyleneimine-CS2 (PEI-CS2) adduct is an alkali metal salt, notably a potassium or sodium salt. Preferentially, this salt is a sodium salt. Notably, the polyethyleneimine-CS2 adduct in the form of a salt (PEI-CS2) is such that all the CS2 functions are in a salified form.

Advantageously, a composition containing two different polyethyleneimine-CS2 adducts in the form of a salt (PEI-CS2) may be used in step a) of the process. In other words, the composition contains two (PEI-CS2) salts which differ in that they have been obtained from different polyethyleneimines, but their counterions, *i.e.* an alkali metal cation, may be identical.

Preferentially, to perform step a) of the process of the invention, the polyethyleneimine-CS2 adduct in the form of a salt (PEI-CS2) is in aqueous solution at a concentration of between 0.5% and 60% by weight, said aqueous solution having a pH of between 10 and 14. The salt is notably added in this form to the solution **AS.**

Advantageously, for step a) of the process of the invention, the polyethyleneimine-CS2 adduct in the form of a salt (PEI-CS2) is the product of the reaction of a polyethyleneimine with carbon disulfide, with a molar proportion of carbon disulfide/sum of amine groups present in the polyethyleneimine of between 0.5 and 1.1, preferentially between 0.6 and 0.95.

On conclusion of step d), the process according to the invention allows to afford an aqueous solution **L** predominantly containing the rare-earth elements initially present in the aqueous solution **AS.**

In other words, the aqueous solution **L,** obtained on conclusion of step d), comprises a ratio (other metals from columns 4 to 14 of the Periodic Table of the Elements/elements among the rare-earth elements) which is lower than the ratio (other metals from columns 4 to 14 of the Periodic Table of the Elements/elements among the rare-earth elements) of the aqueous solution **AS.**

Notably, the ratio (other metals from columns 4 to 14 of the Periodic Table of the Elements/elements among the rare-earth elements) in the aqueous solution **L** is 0, i.e. it is free of other metals from columns 4 to 14 of the Periodic Table of the Elements.

The rare-earth elements, and also the other metals in columns 4 to 14 of the Periodic Table of the Elements, are notably present in the solution **AS** in a cationic form.

In addition, the process of the invention may preferentially comprise two successive steps b1) and b2) between steps b) and c), said steps consisting in:

b1) adding to the aqueous solution obtained in step a) a water-soluble polymer **P** with an average molecular weight of between 20 000 and 1 million daltons and stirring for at least 1 minute,
b2) adding to the solution obtained in step b1) a water-soluble polymer **P'** with an average molecular weight greater than 1 million daltons and stirring for at least 1 minute.

One of the advantages of performing steps b1) and b2) is a reduction in the time required for step c).

The term "polymer" means a natural polymer or a chemically modified natural polymer or a synthetic homopolymer or copolymer prepared from at least two different monomers.

Polymer **P** has a molecular weight of between 50 000 and 1 million daltons. Polymer **P'** has a molecular weight greater than or equal to 1 million daltons, preferentially between 1 and 40 million daltons, more preferentially between 3 and 30 million daltons. The term "molecular weight" means the weight-average molecular weight.

The molecular weight is determined by the intrinsic viscosity of the polymer. The intrinsic viscosity may be measured via methods known to those skilled in the art and can be calculated from the reduced viscosity values for different polymer concentrations by a graphical method consisting in plotting the reduced viscosity values (y-axis) against the concentration (x-axis) and extrapolating the curve to zero concentration.

The intrinsic viscosity value is plotted on the y-axis or using the least squares method. The molecular weight can then be determined via the Mark-Houwink equation:

[Math 1]

$$[\eta] = K\, M^{\alpha}$$

$[\eta]$ represents the intrinsic viscosity of the polymer determined via the method for measuring viscosity in solution.

K represents an empirical constant.

M represents the molecular weight of the polymer.

$\alpha$ represents the Mark-Houwink coefficient.

K and $\alpha$ depend on the particular polymer-solvent system.

The term "water-soluble polymer" denotes a polymer which gives an aqueous solution without insoluble particles when dissolved with stirring at 25°C and at a concentration of 10 $g.L^{-1}$ in deionized water.

The water-soluble polymers **P** or **P'** may be natural polymers or chemically modified natural polymers or synthetic polymers or semi-synthetic (or semi-natural) polymers.

Advantageously, polymer **P** is chosen from poly(aluminium chloride), the product of polycondensation reaction between epichlorohydrin and dimethylamine, homopolymers or copolymers of diallyldimethylammonium halide.

Polymer **P'** is preferentially synthetic and made up of at least one anionic hydrophilic monomer and/or at least one cationic hydrophilic monomer and/or at least one nonionic hydrophilic monomer,

- the nonionic hydrophilic monomer(s) being chosen from the group comprising water-soluble vinyl monomers such as acrylamide, methacrylamide, N-alkylacrylamides, N-alkylmethacrylamides, N,N-dialkylacrylamides (for example N,N-dimethylacrylamide or N,N-diethylacrylamide), N,N-dialkylmethacrylamides, alkoxylated acrylic acid esters, alkoxylated methacrylic acid esters, N-vinylpyrrolidone, N-methylol(meth)acrylamide, N-vinylcaprolactam, N-vinylformamide (NVF), N-vinylacetamide, N-vinylimidazole, N-vinylsuccinimide, acryloylmorpholine (ACMO), glycidyl methacrylate, glyceryl methacrylate, diacetoneacrylamide, methacrylic anhydride, acrylonitrile, maleic anhydride, itaconic anhydride, itaconamide, vinylpyridine, hydroxyalkyl (meth)acrylates, thioalkyl (meth)acrylates, isoprenol and alkoxylated derivatives thereof, hydroxyethyl (meth)acrylates and alkoxylated derivatives thereof, hydroxypropyl acrylate and alkoxylated derivatives thereof, vinyl acetate, and mixtures thereof, the alkyl groups being C1-C3 hydrocarbon-based chains;
- the anionic hydrophilic monomer(s) being chosen from the monomers acrylic acid, methacrylic acid, dimethylacrylic acid, itaconic acid, C1-C3 hemiesters of itaconic acid, acryloyl chloride, crotonic acid, maleic acid, fumaric acid, 3-acrylamido-3-methylbutanoic acid, vinylsulfonic acid, vinylphosphonic acid, allylsulfonic acid, methallylsulfonic acid, 2-methylidenepropane-1,3-disulfonic acid, 2-sulfoethyl methacrylate, sulfopropyl methacrylate, sulfopropyl acrylate, allylphosphonic acid, ethylene glycol methacrylate phosphate, styrenesulfonic acid, 2-acrylamido-2-methylpropanesulfonic acid (ATBS), 2-acrylamido-2-methylpropanesulfonic acid, 3-allyloxy-2-hydroxypropanesulfonic acid, diethylallyl phosphonate, carboxyethyl acrylate; water-soluble salts of all these monomers, such as alkali metal, alkaline-earth metal or ammonium salts thereof; and mixtures thereof;
- the cationic hydrophilic monomer(s) being chosen from diallyldialkylammonium salts such as diallyldimethylammonium chloride (DADMAC); acidified or quaternized salts of dialkylaminoalkyl(meth)acrylamides, for instance methacrylamidopropyltrimethylammonium chloride (MAPTAC), acrylamidopropyltrimethylammonium chloride (APTAC), acidified or quaternized salts of dialkylaminoalkyl acrylate, such as quaternized or salified dimethylaminoethyl acrylate (ADAME), acidified or quaternized salts of dialkylaminoalkyl methacrylate, such as quaternized or salified dimethylaminoethyl methacrylate (MADAME), and mixtures thereof.

The term "hydrophilic monomer" denotes a monomer which has an octanol/water partition coefficient Kow, characterized by log (Kow,) inferior or equal to 1, in which the Kow partition coefficient is determined at 25°C in an octanol/water mixture having a volume ratio of 1/1, at a pH of between 6 and 8.

[Math 2]

$$K_{ow} = \frac{[monomer]_{octanol}}{[monomer]_{water}}$$

The polymer **P'** may have a linear, branched, star-branched or comb-shaped structure. This structure may be obtained according to the general knowledge of a person skilled in the art.

Polymers **P** and **P'** may be added during steps b1) and b2) in various forms, notably in liquid form, for example as a solution, emulsion, dispersion or suspension, or in solid form, independently of each other. The polymers may be in the form of an aqueous solution, an inverse emulsion (water-in-oil), an aqueous suspension, a powder or a dispersion of the polymer in oil. Polymer **P** is preferably in the form of an aqueous solution. Polymer **P'** is advantageously in the form of a powder or an inverse emulsion.

In general, the water-soluble polymers **P** and **P'** do not require the development of any particular polymerization process. Specifically, they can be obtained via any polymerization technique well known to those skilled in the art. These may notably include solution polymerization; gel polymerization; precipitation polymerization; emulsion polymerization (aqueous or inverse); suspension polymerization; reactive extrusion polymerization; water-in-water polymerization; or micellar polymerization.

The amount of water-soluble polymers **P** and **P'** added during steps b1) and b2) is notably from 1 to 10 000 ppm by weight in the solution obtained from step a) or b1) of the process, preferentially between 10 and 5000 ppm by weight.

For step b) of the process of the invention, the aqueous solution obtained in step a) is stirred for at least 1 minute. Preferentially, this solution is stirred for between 1 and 5 minutes. A person skilled in the art knows how to choose the appropriate stirring means. For steps b1) and/or b2), the stirring times are of the same order of magnitude as for step b).

For step c) of the process of the invention, stirring of the solution obtained from step b) is stopped to wait at least 5 minutes, notably 10 minutes or 15 minutes, for the formation of a suspension **S.** Preferentially, the waiting time for the formation of the suspension **S** is between 5 minutes and 2 hours.

For step d) of the process of the invention, a person skilled in the art knows how to choose the appropriate liquid/solid separation method. By way of example, this method may be a filtration or decantation step.

The process of the invention may advantageously comprise the following steps after step d):

e) adding at least one polyethyleneimine-CS2 adduct in the form of a salt (PEI-CS2) to the aqueous solution **L;**
f) stirring the aqueous solution obtained in step d) for at least 1 minute;
g) stopping the stirring and waiting at least 5 minutes for a suspension **S'** to form;
h) performing a liquid/solid separation on suspension **S'** to obtain a solid **SO** predominantly containing the elements among the rare-earth elements initially present in solution **L.**

The stirring time (step f) and waiting time (step g) are of the same order of magnitude as for steps b) and c). The stirring means in step f) is preferentially identical to that in step b). The method of the liquid/solid separation h) is preferentially identical to that of step d).

In particular, the total amount of elements among the rare-earth elements in the solid **SO** is greater than 80%, in particular greater than 90% by mass, relative to the total amount of elements among the rare-earth elements initially present in the **L** solution.

The amount of polyethyleneimine-CS2 adduct in the form of a salt (PEI-CS2) added in steps a) and e) is determined as a function of the cationic charge density of the aqueous solution **AS.** More precisely, it is determined in such a way that the anionic charges of the polyethyleneimine/carbon disulfide salt (PEI-CS2) neutralize the cationic charges of the metal elements present in the aqueous solution **AS.**

The aqueous solution **AS** is analysed by Inductively Coupled Plasma - Optical Emission Spectrometry (ICP-OES) to determine the content of each metal element making up the solution. These contents, weighted by the molecular weight of each metal element, allow the cationic charge density of the solution to be determined.

This cationic charge density allows calculation of the amount of polyethyleneimine-CS2 adduct in the form of a salt to be used to neutralize all the cationic charges of the metal elements to an optimum amount of 100%. The stoichiometric dose thus corresponds to the ratio between the anionic charge density of PEI-CS2 and the cationic charge density of the metal element solution. If required, under- or over-dosing may be applied relative to this 100% value.

Preferentially for step a) of the process of the invention, the stoichiometric dose corresponding to the ratio between the anionic charge density of the polyethyleneimine-CS2 adduct in the form of a salt (PEI-CS2) and the total cationic charge density of the metal elements in the solution **AS** is between 80% and 120%, even more preferentially between 95% and 105%.

For step e) of the process of the invention, the stoichiometric dose corresponding to the ratio between the anionic charge density of the polyethyleneimine-CS2 adduct in the form of a salt (PEI-CS2) and the total cationic charge density of the metal elements in the solution **AS** is between 200% and 500%, more preferentially between 250% and 400%.

The invention and the advantages thereof will be seen more clearly in the light of the following examples and figures.

[Fig. 1]

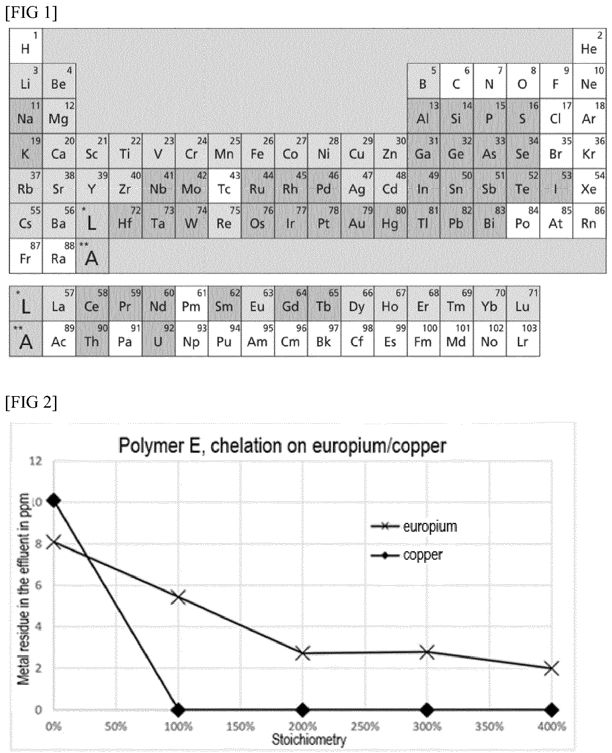

Figure 1 represents Mendeleyev's Periodic Table. The shaded cells represent the elements that can be analysed using ICP-OES technology.
[Fig. 2]
Figure 2 represents the evolution of the concentration of europium and copper in the filtrate obtained from the solution treated with PEI-CS2, according to Example 6. The x-axis represents the stoichiometry, expressed as a percentage, of the PEI-CS2 added, while the y-axis represents the concentration of cations in the solution, expressed in ppm.
[Fig. 3]

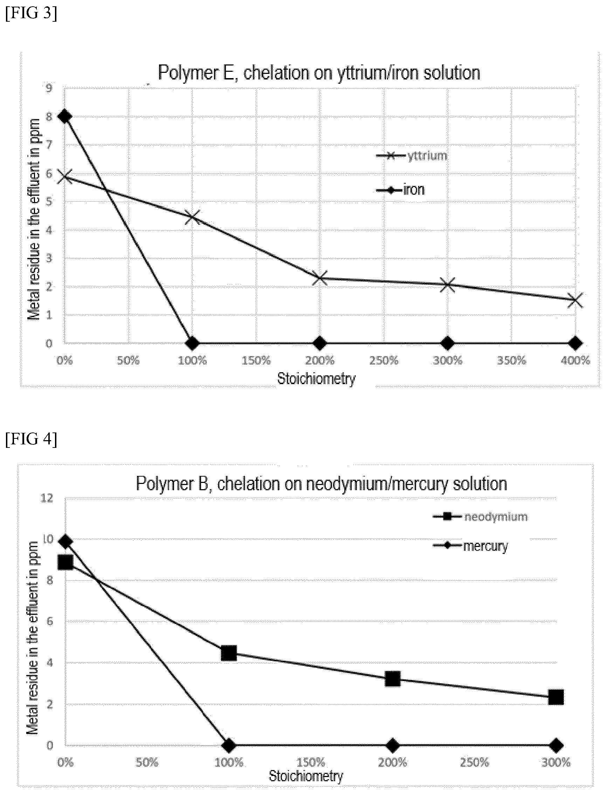

Figure 3 represents the evolution of the concentration of yttrium and iron in the filtrate obtained from the solution treated with PEI-CS2, according to Example 7. The x-axis represents the stoichiometry, expressed as a percentage, of the PEI-CS2 added, while the y-axis represents the concentration of cations in the solution, expressed in ppm.
[Fig. 4]
Figure 4 represents the evolution of the concentration of neodymium and mercury in the filtrate obtained from the solution treated with PEI-CS2, according to Example 11. The x-axis represents the stoichiometry, expressed as a percentage, of the PEI-CS2 added, while the y-axis represents the concentration of cations in the solution, expressed in ppm.
[Fig. 5]

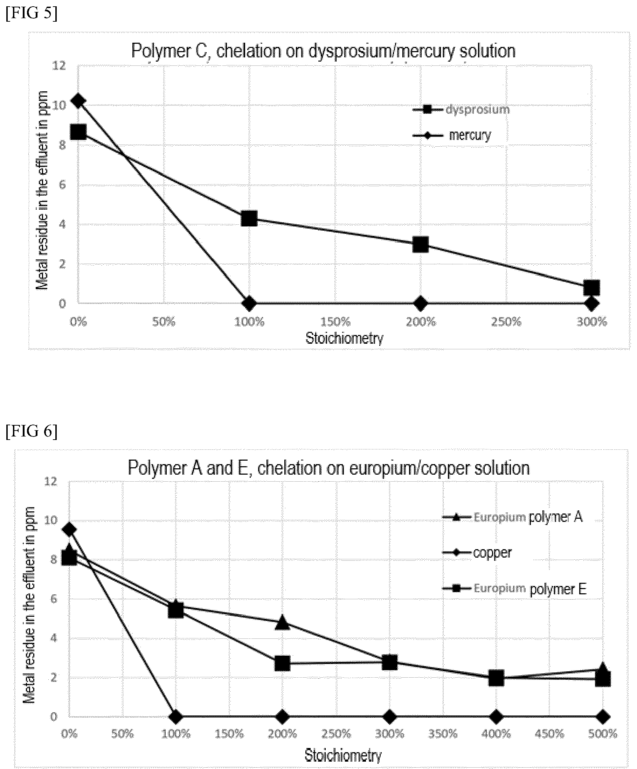

Figure 5 represents the evolution of dysprosium and mercury concentration in the filtrate obtained from the solution treated with PEI-CS2, according to Example 13. The x-axis represents the stoichiometry, expressed as a percentage, of the PEI-CS2 added, while the y-axis represents the concentration of cations in the solution, expressed in ppm.
[Fig. 6]
Figure 6 represents the evolution of the concentration of europium and copper in the filtrate obtained from the solution treated with PEI-CS2, by addition of two polymers, according to Example 14. The x-axis represents the stoichiometry, expressed as a percentage, of the PEI-CS2 added, while the y-axis represents the concentration of cations in the solution, expressed in ppm.
[Fig. 7]

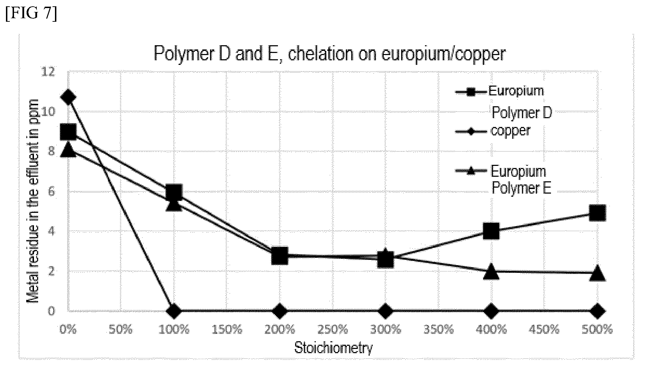

Figure 7 represents the evolution of the concentration of europium and copper in the filtrate obtained from the solution treated with PEI-CS2, by addition of two polymers, according to Example 15. The x-axis represents the stoichiometry, expressed as a percentage, of the PEI-CS2 added, while the y-axis represents the concentration of cations in the solution, expressed in ppm.

**EXAMPLES:**

***ICP-OES (Inductively Coupled Plasma - Optical Emission Spectrometry) analysis method:***

ICP-OES technology is a technique that allows analysis of most of the elements in Mendeleyev's Periodic Table (Figure 1).

The principle of ICP-OES consists in introducing a sample including the analytes of interest, which is then ionized by an argon plasma. By definition, a plasma is a totally ionized but electrically neutral gas (presence of free electrons and ions). It may be likened to a flame, with a temperature that may be up to 10 000 K.

The sample first enters a chamber as a liquid and in the form of an aerosol. The function of the chamber is to generate a homogeneous aerosol at the outlet, which is carried to the torch by an argon stream. The energy afforded by the plasma then allows vaporization, atomization and, finally, ionization of the various elements in the injected sample.

These different elements (atoms) will absorb the photons generated by the plasma, causing the electrons in these elements to move to more energetic electron shells. Once excited, the atoms lose energy by emitting one or more photons, as a function of their state of excitation. These photons are characterized by an energy that can be related to a wavelength $\lambda$ according to the Planck-Einstein relationship:

[Math 3]

$$E = \frac{h.c}{\lambda}$$

(E: photon energy (in Joules), h: Planck's constant ($6.63 \times 10^{-34}$ J.s, c: speed of light in a vacuum, $\lambda$ : wavelength (in meter) of the electromagnetic wave associated with the photon under consideration).

By means of the optical sensors and detectors of the measuring apparatus, these wavelengths are identified, thus allowing the compounds present to be identified and quantified.

As a function of each element under consideration and taking into account our particular matrices, here is the protocol put in place:

Preparation of the samples:

- Control sample: 1 mL of the solution containing 10 ppm of the salt of the element is diluted with 9 mL of nitric acid at 5% by weight in water.
- Samples after chelation: two drops of nitric acid at 69% by weight are added to 10 mL of the samples.

The corresponding solutions are injected into the ICP-OES 5800 (Agilent), using the following parameters:

- 1.2 kW RF ICP power
- carrier gas: argon flow rate of 0.7 L/min.

The elements La, Ce, Pr, Nd, Sm, Gd, Dy, Fe, Hg and Cu were analysed in axial view. The elements Y and Eu were analysed in radial view with a measuring height of 8 mm. Calibration from 0.1 ppm to 5 ppm was obtained using the standard Agilent solution for each element.

***Determination of the anionic charge density of a salt resulting from the reaction of a polyethyleneimine with carbon disulfide (called PEI-CS2).***

The charge density of PEI-CS2 is calculated from the colloidal charge (meq/g), determined by colloidal assay using methyl glycol chitosan (MGC) and polyvinyl sulfate potassium (PVSK).

A solution containing 5 g/L PEI-CS2 is prepared by diluting, with magnetic stirring, 1.00 g of PEI-CS2 equivalent (dry extract) in a 200 mL beaker, the amount of deionized water added being a function of the initial PEI-CS2 concentration. When the 5 g/L PEI-CS2 solution is homogeneous, weigh out 0.25 g of solution and add 100 mL of deionized water. Adjust the pH precisely to the range 10.4-10.6 with 0.1N acid or sodium hydroxide. With stirring, add exactly 5 mL of MGC (1/200 N), then three drops of toluidine blue and assay with PVSK (1/400 N).

The equivalence point is obtained when the blue colour changes to violet and remains violet for 20 seconds, the amount in millilitres of PVSK introduced is noted A.

The same measurement is performed without the addition of PEI-CS2, and the amount in millilitres of PVSK is noted B.

The anionic charge density is calculated using the following formula:

[Math 4]

$$C(meq/g) = (B-A) \times N_{PVSK} / (5 \times m \times 10^{-3}),$$

in which m = mass of PEI-CS2 solution at 5 g/L

$N_{PVSK}$ = normality of PVSK solution, = f / 400, with factor f given by the supplier WAKO.

***Stoichiometric assay of an aqueous solution containing metal elements***

The solution is analysed by ICP-OES to determine the content of each metal element making up the solution. These contents, weighted by the molecular weight of each metal element, allow the cationic charge density of the solution to be determined.

This cationic charge density allows calculation of the amount of PEI-CS2 polymer to be used to neutralize all the cationic charges of the metal elements at an optimum content of 100%. The stoichiometric dose thus corresponds to the ratio between the anionic charge density of PEI-CS2 and the cationic charge density of the metal element solution. If required, under- or over-dosing may be applied relative to this 100% value.

Example to clarify the calculation of the stoichiometric percentage:

For an aqueous solution (1000 g) containing 20 ppm copper(II), the amount of PEI-CS2 (charge density: 2.84 meq/g) to have 100% of stoichiometry is determined according to the following formula:

[Math 5]

$$Q = (TS/100) * (Cmetal * VALmetal) / (MWmetal * D /1000)$$

With TS = target stoichiometry (%)
Q = amount of PEI-CS2 to be added (in ppm)
Cmetal = metal concentration (in ppm)
VALmetal = valence of the metal
MWmetal: metal molecular mass (g/mol)
D = PEI-CS2 polymer charge density (meq/g)

Thus, for 100% of stoichiometry, 222 ppm of PEI-CS2 are required.

*Synthesis of PEI-CS2 polymers*

*Example 1: Polymer A*

248 g of water, 42 g of sodium hydroxide (50% by weight in water) and 50 g of Epomin® P 1050 (PEI from Nippon Shokubai, molar mass 70 000 daltons; primary/secondary/tertiary amine molar proportions: 25/50/25) are introduced into a 1L double-jacketed reactor, fitted with a motor, a stirring paddle and a condenser. The resulting mixture is mixed for 15 minutes and maintained at 35°C by means of a cold generator via the reactor's double-jacket.

A dropping funnel is filled with 44 g of $CS_2$ and fitted to the 1L reactor. $CS_2$ is thus added to the reactor dropwise over a period of 80 min. The temperature of the reaction medium is maintained at 40°C, and water is fed into the condenser to prevent loss of $CS_2$. The reaction medium turns reddish, reflecting the progress of the reaction. After the addition of $CS_2$, the medium is maintained at 40-50°C with stirring for 120 min.

A further addition of 7 g of Epomin® P 1050 and 32 g of water is then performed in the reaction medium. The medium is maintained at the same temperature for 400 min and then cooled to 25°C.

The pH is then adjusted with sodium hydroxide (50% by weight in water) to a value of between 10.0 and 12.0. The solution obtained is an aqueous solution containing 20% by weight of polymer A (PEI-CS2).

*Example 2: Polymer B*

The PEI-CS2 polymer is obtained according to the same protocol as Example 1 with 165 g of water, 86 g of sodium hydroxide and 50 g Epomin® SP 200 (PEI from Nippon Shokubai, molar mass 10 000 daltons, primary/secondary/tertiary amine molar proportions: 35/35/30) in the 1L reactor. The dropping funnel is filled with 82 g of $CS_2$. Final addition: 3 g of Epomin® SP 200 and 11 g of water. The solution obtained is an aqueous solution containing 40% by weight of polymer B (PEI-CS2).

*Example 3: Polymer C*

The PEI-CS2 polymer is obtained according to the same protocol as Example 1 with 165 g of water, 86 g of sodium hydroxide and 50 g Epomin® SP 018 (PEI from Nippon Shokubai, molar mass 18 000 daltons, primary/secondary/tertiary amine molar proportions: 35/35/30) in the 1L reactor. The dropping funnel is filled with 82 g of $CS_2$. Final addition: 3 g of Epomin® SP 018 and 11 g of water. The solution obtained is an aqueous solution containing 40% by weight of polymer C (PEI-CS2).

*Example 4: Polymer D*

The PEI-CS2 polymer is obtained using the same protocol as Example 1 with 98 g of water, 121 g of sodium hydroxide and 50 g tetraethylenepentamine (TEPA) in the 1L reactor. The dropping funnel is filled with 115 g of $CS_2$. Final addition: 2 g of TEPA and 7 g of water. The solution obtained is an aqueous solution containing 50% by weight of polymer D (PEI-CS2).

*Example 5: Polymer E*

The PEI-CS2 polymer is obtained using the same protocol as Example 1 with 159 g of water, 102 g of sodium hydroxide, 25 g of TEPA and 50 g of Epomin® P 1050 in the 1L reactor. The dropping funnel is filled with 115 g of $CS_2$. Final addition: 3 g of TEPA and 10 g of water. The solution obtained is an aqueous solution containing 40% by weight of polymer E.

### Treatments for solutions containing metal elements

**Examples 6:**

To a 2L volumetric flask containing a Teflon-coated magnetic bar, 2 L of deionized water in which are dissolved 40 mg of europium chloride hydrate ($EuCl_3 \cdot 6H_2O$) and 96.4 mg of copper sulfate pentahydrate ($Cu(SO_4)_2 \cdot 5H_2O$), so as to obtain a solution containing 10 ppm of europium salt and 10 ppm of copper salt are added. ICP-OES analysis is performed to determine the initial amount of each element in the solution (so as to avoid variability in hydration from one salt to another depending on the storage conditions).

The polymer E solution (Example 5) is diluted to 1% (by weight) by mixing 40 mg thereof with 1.41 g of deionized water.

The aqueous solution containing europium and copper is stirred moderately, and the diluted polymer E solution is added (amount adjusted to obtain 100% by stoichiometry of polymer E).

The mixture is kept stirring for 60 sec and a precipitate appears.

Stirring is stopped and the suspension is left to settle naturally for 60 min. The solution obtained is filtered (0.45 $\mu$ Sartorius filter) to perform a liquid-solid separation.

The filtrate is analysed by ICP-OES to measure the concentration of the elements europium and copper. The analysis of the filtrate during the treatment is represented by Figure 2.

1998 g of filtrate solution are recovered. The filtrate contains 5.43 ppm of dissolved europium element and 0 ppm of copper.

On the filter, 2 g of solid are recovered. It contains 12 000 ppm of copper (analysis by ICP-OES).

Polymer E therefore allows copper enrichment in the precipitate formed (very rapidly).

The filtrate is once again supplemented with 300% by stoichiometry of polymer E. After precipitation, the suspension obtained is filtered (0.45 $\mu$ Sartorius filter).

2.5 g of a solid are recovered on the filter. They contain 9400 ppm of europium (ICP-OES analysis).

The twofold treatment with polymer E thus affords a solid enriched in europium.

**Examples 7:**

To a 2L volumetric flask containing a Teflon®-coated magnetic bar, 2 L of deionized water in which are dissolved 49.5 mg of hydrated yttrium chloride ($YCl_3 \cdot xH_2O$) and 178 mg of iron chloride ($FeCl_3$), so as to obtain a solution containing 10 ppm of yttrium salt and 10 ppm of ferric salt are added. ICP-OES analysis is performed to determine the initial amount of each element in the solution (so as to avoid variability in hydration from one salt to another depending on the storage conditions).

The polymer E solution (Example 5) is diluted to 1% (by weight) by mixing 50 mg thereof with 1.91 g of deionized water.

The aqueous solution containing yttrium and iron is stirred moderately, and the diluted polymer E solution is added (amount adjusted to obtain 100% by stoichiometry of polymer E).

The mixture is kept stirring for 60 sec and a precipitate appears.

Stirring is stopped and the suspension is left to settle naturally for 60 min. The solution obtained is filtered (0.45 $\mu$ Sartorius filter) to perform a liquid-solid separation.

The filtrate is analysed by ICP-OES to measure the concentration of the elements yttrium and iron. The analysis of the filtrate during the treatment is represented in Figure 3.

1997.5 g of filtrate solution are recovered. The filtrate contains 5.90 ppm of dissolved yttrium element and 0 ppm of iron.

On the filter, 2.5 g of solid are recovered. It contains 24 490 ppm of iron (analysis by ICP-OES).

Polymer E thus allows iron enrichment in the precipitate formed (very rapidly). As for Example 6, the addition of 300% by stoichiometry of polymer E to the filtrate allows the solid obtained after precipitation and filtration to be enriched in yttrium in a second stage.

**Examples 8:**

To a 2L volumetric flask containing a Teflon®-coated magnetic rod, 2 L of deionized water in which are dissolved the following metal salts (Table 1), so as to obtain a mixture containing 10 ppm of each metal salt, respectively are added. ICP-OES analysis is performed to determine the initial amount of each element in the solution (so as to avoid variability in hydration from one salt to another depending on the storage conditions).

[Table 1]

Table 1: amounts of added salts

| Salt | Molecular weight (g/mol) | Weighed mass (mg) |
|---|---|---|
| Neodymium(III) chloride | 250.6 | 45.1 |
| Dysprosium(III) chloride | 268.9 | 40.9 |
| Lanthanum(III) chloride heptahydrate | 371.43 | 53.5 |
| Gadolinium(III) chloride heptahydrate | 371.7 | 47.3 |
| Europium(III) chloride | 258.3 | 40.1 |
| Yttrium(III) chloride | 195.3 | 49.5 |
| Cerium(III) chloride heptahydrate | 372.6 | 53.2 |
| Samarium(III) chloride | 256.8 | 41.9 |
| Copper(II) sulfate pentahydrate | 249.6 | 96.4 |
| Mercury(II) chloride | 271.5 | 33.2 |
| Iron(II) chloride | 162.2 | 178.2 |

The polymer E solution (Example 5) is diluted to 1% (by weight) by mixing 180 mg thereof with 6.93 g of deionized water.

The aqueous solution containing the various metal elements is stirred moderately, and the diluted polymer E solution is added (amount adjusted to obtain 100% by stoichiometry of polymer E).

The mixture is kept stirring for 60 sec and a precipitate appears.

Stirring is stopped and the suspension is left to settle naturally for 60 min. The solution obtained is filtered (0.45 μ Sartorius filter) to perform a liquid-solid separation.

The filtrate is analysed by ICP-OES to measure the concentration of the various metal elements. The filtrate analysis is described in Table 2.

At 100% of stoichiometry, the filtrate contains between 4 and 6 ppm of dissolved lanthanide elements and 0 ppm of heavy metals. Polymer E allows enrichment in heavy metals in the precipitate and enrichment in lanthanides in the filtrate.

[Table 2]

Table 2: ICP-OES analysis of the filtrate (amounts in ppm)

| Element | 0% of stoichiometry | 100% of stoichiometry |
|---|---|---|
| Neodymium | 9.03 | 4.03 |
| Dysprosium | 8.1 | 4.1 |
| Lanthanum | 8.69 | 4.06 |
| Gadolinium | 8.07 | 4.12 |
| Europium | 8.1 | 5.43 |
| Yttrium | 5.89 | 4.45 |
| Cerium | 11.32 | 4.73 |
| Samarium | 9.1 | 4.25 |
| Copper | 10.09 | 0 |
| Mercury | 12.93 | 0 |

(continued)

| Element | 0% of stoichiometry | 100% of stoichiometry |
|---------|---------------------|------------------------|
| Iron | 8.02 | 0 |

**Example 9:**

To a 2L volumetric flask containing a Teflon®-coated magnetic rod, 2 L of deionized water in which are dissolved the following lanthanide salts (Table 3), so as to obtain a mixture containing 10 ppm of each lanthanide salt, respectively, are added. ICP-OES analysis is performed to determine the initial amount of each element in the solution (so as to avoid variability in hydration from one salt to another depending on the storage conditions).

[Table 3]

Table 3: amounts of lanthanide salts added

| Salt | Molecular weight (g/mol) | Weighed mass (mg) |
|------|--------------------------|-------------------|
| Neodymium(III) chloride | 250.6 | 45.1 |
| Dysprosium(III) chloride | 268.9 | 40.9 |
| Lanthanum(III) chloride heptahydrate | 371.4 | 53.5 |
| Gadolinium(III) chloride heptahydrate | 371.7 | 47.3 |
| Europium(III) chloride | 258.3 | 40.1 |
| Yttrium(III) chloride | 195.3 | 49.5 |
| Cerium(III) chloride heptahydrate | 372.6 | 53.2 |
| Samarium(III) chloride | 256.8 | 41.9 |

The polymer E solution (Example 5) is diluted to 1% (by weight) by mixing 480 mg thereof with 18.74 g of deionized water.

The aqueous solution containing the various lanthanides is stirred moderately, and the diluted polymer E solution is added (amount adjusted to obtain the desired polymer E stoichiometry).

The mixture is kept stirring for 60 sec and a precipitate appears.

Stirring is stopped and the suspension is left to settle naturally for 60 min. The solution obtained is filtered (0.45 μ Sartorius filter) to perform a liquid-solid separation.

The filtrate is analysed by ICP-OES to measure the concentration of the various metal elements. The filtrate analysis is described in Table 4.

At 400% of stoichiometry, the filtrate contains between 0.3 and 1.1 ppm of each lanthanide. Polymer E, at high dose, thus allows all the lanthanides to be chelated effectively and produces a lanthanide-enriched solid after precipitation and filtration.

[Table 4]

Table 4: ICP-OES analysis of the filtrate (amounts in ppm)

| Element | Stoichiometry (polymer E) | | | | |
|---------|------|------|------|------|------|
| | 0% | 100% | 200% | 300% | 400% |
| Neodymium | 8.44 | 7.13 | 3.38 | 0.89 | 0.41 |
| Dysprosium | 7.94 | 6.93 | 3.7 | 0.84 | 0.37 |
| Lanthanum | 9.59 | 8.41 | 5.22 | 2.07 | 1.09 |
| Gadolinium | 9.71 | 8.82 | 5.34 | 1.51 | 0.73 |

(continued)

| | Stoichiometry (polymer E) | | | | |
|---|---|---|---|---|---|
| Element | 0% | 100% | 200% | 300% | 400% |
| Europium | 7.66 | 6.72 | 3.5 | 0.86 | 0.39 |
| Yttrium | 6.88 | 6.31 | 4.13 | 1.2 | 0.58 |
| Cerium | 8.92 | 7.25 | 3.24 | 0.93 | 0.43 |
| Samarium | 9.46 | 8.21 | 5.27 | 1.98 | 0.95 |

**Example 10:**

To a 2L volumetric flask containing a Teflon®-coated magnetic rod, 2 L of deionized water in which are dissolved the lanthanide salts (Table 3 of Example 9), so as to obtain a mixture containing 10 ppm of each lanthanide salt, respectively, are added. ICP-OES analysis is performed to determine the initial amount of each element in the solution (so as to avoid variability in hydration from one salt to another depending on the storage conditions).

The polymer B solution (Example 2) is diluted to 1% (by weight) by mixing 480 mg thereof with 18.74 g of deionized water.

The aqueous solution containing the various lanthanides is stirred moderately, and the diluted polymer B solution is added (amount adjusted to obtain the desired polymer B stoichiometry).

The mixture is kept stirring for 60 sec and a precipitate appears.

Stirring is stopped and the suspension is left to settle naturally for 60 min. The solution obtained is filtered (0.45 μ Sartorius filter) to perform a liquid-solid separation.

The filtrate is analysed by ICP-OES to measure the concentration of the various metal elements. The filtrate analysis is described in Table 5.

At 300% of stoichiometry, the filtrate contains between 2 and 3 ppm of each lanthanide. Polymer B, at high dose, thus allows all the lanthanides to be chelated effectively, and produces a lanthanide-enriched solid after precipitation and filtration.

[Table 5]

Table 5: ICP-OES analysis of the filtrate (amounts in ppm)

| | Stoichiometry (polymer B) | | | |
|---|---|---|---|---|
| Element | 0% | 100% | 200% | 300% |
| Neodymium | 8.87 | 4.48 | 3.23 | 2.34 |
| Dysprosium | 8.54 | 4.55 | 3.24 | 2.01 |
| Lanthanum | 8.32 | 4.51 | 3.36 | 2.6 |
| Gadolinium | 9.56 | 4.57 | 3.39 | 2.46 |
| Europium | 9.64 | 5.88 | 4.97 | 2.98 |
| Yttrium | 7.02 | 4.9 | 4.55 | 2.27 |
| Cerium | 10.21 | 5.18 | 3.18 | 2.59 |
| Samarium | 9.87 | 4.7 | 3.38 | 2.62 |

**Examples 11:**

To a 2L volumetric flask containing a Teflon-coated magnetic bar, 2 L of deionized water in which are dissolved 45.1 mg of hydrated neodymium chloride ($NdCl_3 \cdot xH_2O$) and 33.2 mg of mercury chloride ($HgCl_2$), so as to obtain a solution containing 10 ppm of neodymium salts and 10 ppm of mercury salt are added. ICP-OES analysis is performed to determine the initial amount of each element in the solution (so as to avoid variability in hydration from one salt to another depending on the storage conditions).

The polymer B solution (Example 2) is diluted to 1% (by weight) by mixing 22 mg thereof with 0.85 g of deionized water.

The aqueous solution containing neodymium and mercury is stirred moderately, and diluted polymer B solution is added (amount adjusted to obtain 100% by stoichiometry of polymer B).

The mixture is kept stirring for 60 sec and a precipitate appears.

Stirring is stopped and the suspension is left to settle naturally for 60 min. The solution obtained is filtered (0.45 μ Sartorius filter) to perform a liquid-solid separation.

The filtrate is analysed by ICP-OES to measure the concentration of the elements neodymium and mercury. The analysis of the filtrate during the treatment is represented in Figure 4.

1997.5 g of filtrate solution are recovered. The filtrate contains 4.48 ppm of dissolved neodymium element and 0 ppm of mercury.

On the filter, 2.5 g of solid are recovered. The solid contains 8000 ppm (by weight) of mercury (analysis by ICP-OES).

Polymer B thus allows mercury enrichment in the precipitate formed (very rapidly).

As for Example 6, the addition of 300% by stoichiometry of polymer B to the filtrate allows the solid obtained after precipitation and filtration to be enriched in neodymium in a second stage.

**Examples 12:**

To a 2L volumetric flask containing a Teflon®-coated magnetic bar, 2 L of deionized water in which are dissolved the lanthanide salts (Table 3 of Example 9), so as to obtain a mixture containing 10 ppm of each lanthanide salt, respectively, are added. ICP-OES analysis is performed to determine the initial amount of each element in the solution (so as to avoid variability in hydration from one salt to another depending on the storage conditions).

The polymer C solution (Example 3) is diluted to 1% (by weight) by mixing 480 mg thereof with 18.74 g of deionized water.

The aqueous solution containing the various lanthanides is stirred moderately, and the diluted polymer C solution is added (amount adjusted to obtain the desired polymer C stoichiometry).

The mixture is kept stirring for 60 sec and a precipitate appears.

Stirring is stopped and the suspension is left to settle naturally for 60 min. The solution obtained is filtered (0.45 μ Sartorius filter) to perform a liquid-solid separation.

The filtrate is analysed by ICP-OES to measure the concentration of the various metal elements. The filtrate analysis is described in Table 6.

At 300% of stoichiometry, the filtrate contains between 0.8 and 1.8 ppm of each lanthanide. Polymer C, at high dose, thus allows all the lanthanides to be chelated effectively, and produces a lanthanide-enriched solid after precipitation and filtration.

[Table 6]

Table 6: ICP-OES analysis of the filtrate (amounts in ppm)

|  | Stoichiometry (polymer C) | | | |
|---|---|---|---|---|
| Element | 0% | 100% | 200% | 300% |
| Neodymium | 9.2 | 4.23 | 2.98 | 1.14 |
| Dysprosium | 8.65 | 4.3 | 2.99 | 0.81 |
| Lanthanum | 9.32 | 4.26 | 3.11 | 1.4 |
| Gadolinium | 8.67 | 4.32 | 3.14 | 1.26 |
| Europium | 8.91 | 5.63 | 4.72 | 1.78 |
| Yttrium | 6.84 | 4.65 | 4.3 | 1.07 |
| Cerium | 10.54 | 4.93 | 2.93 | 1.39 |
| Samarium | 9.58 | 4.45 | 3.13 | 1.42 |

**Examples 13:**

To a 2L volumetric flask containing a Teflon®-coated magnetic bar, 2 L of deionized water in which are dissolved 40.9 mg of hydrated dysprosium chloride ($DyCl_3 \cdot xH_2O$) and 33.2 mg of mercury chloride ($HgCl_2$), so as to obtain a solution containing 10 ppm of dysprosium salts and 10 ppm of mercury salts are added. ICP-OES analysis is performed to determine the initial amount of each element in the solution (so as to avoid variability in hydration from one salt to another depending on the storage conditions).

The polymer C solution (Example 3) is diluted to 1% (by weight) by mixing 20 mg thereof with 0.78 g of deionized water.

The aqueous solution containing dysprosium and mercury is stirred moderately, and the diluted polymer C solution is added (amount adjusted to obtain 100% polymer C stoichiometry).

The mixture is kept stirring for 60 sec and a precipitate appears.

Stirring is stopped and the suspension is left to settle naturally for 60 min. The solution obtained is filtered (0.45 $\mu$ Sartorius filter) to perform a liquid-solid separation.

The filtrate is analysed by ICP-OES to measure the concentration of the elements dysprosium and mercury. The analysis of the filtrate during the treatment is represented in Figure 5.

1998.2 g of filtrate solution are recovered. The filtrate contains 4.3 ppm of dissolved dysprosium element and 0 ppm of mercury.

On the filter, 2.2 g of solid are recovered. The solid contains 9090 ppm (by weight) of mercury (analysis by ICP-OES).

Polymer C thus allows mercury enrichment in the precipitate formed (very rapidly).

As for Example 6, the addition of 300% by stoichiometry of polymer C to the filtrate allows the solid obtained after precipitation and filtration to be enriched in dysprosium in a second stage.

**Examples 14:**

To two 2L volumetric flasks containing a Teflon®-coated magnetic bar, 2 L of deionized water in which are dissolved 40 mg of europium chloride hydrate ($EuCl_3 \cdot 6H_2O$) and 96.4 mg of copper sulfate pentahydrate ($Cu(SO_4)_2 \cdot 5H_2O$), so as to obtain a solution containing 10 ppm of europium salt and 10 ppm of copper salt are added. ICP-OES analysis is performed to determine the initial amount of each element in the solution (so as to avoid variability in hydration from one salt to another depending on the storage conditions).

The polymer E solution (Example 5) is diluted to 1% (by weight) by mixing 40 mg thereof with 1.41 g of deionized water.

The process is performed similarly for the polymer A solution (Example 1), which is diluted to 1% (by weight) by mixing 72 mg thereof with 1.37 g of deionized water.

The aqueous solutions containing europium and copper are stirred moderately, and the diluted polymer E and polymer A solutions are added separately (in amounts adjusted to obtain 100% by stoichiometry of polymer A or E) to one of the two volumetric flasks.

The mixtures are kept stirring for 60 sec and precipitates are seen to form. Stirring is stopped and the suspensions are left to settle naturally for 60 min. The solutions obtained are filtered (0.45 $\mu$ Sartorius filter) to perform a liquid-solid separation.

The filtrates are analysed by ICP-OES to measure the concentration of the elements europium and copper. The analysis of the filtrates during treatment is represented in Figure 6.

For polymers A and E, copper is effectively removed from the precipitate at and above 100% of stoichiometry. The europium content in the filtrates is equivalent. At high stoichiometry, however, polymer E allows the precipitate to be slightly more enriched in europium.

**Examples 15:**

To two 2L volumetric flasks containing a Teflon®-coated magnetic bar, 2 L of deionized water in which are dissolved 40 mg of europium chloride hydrate ($EuCl_3 \cdot 6H_2O$) and 96.4 mg of copper sulfate pentahydrate ($Cu(SO_4)_2 \cdot 5H_2O$), so as to obtain a solution containing 10 ppm of europium salt and 10 ppm of copper salt are added. ICP-OES analysis is performed to determine the initial amount of each element in the solution (so as to avoid variability in hydration from one salt to another depending on the storage conditions).

The polymer E solution (Example 5) is diluted to 1% (by weight) by mixing 40 mg thereof with 1.41 g of deionized water.

The process is performed similarly for polymer D solution (Example 4), which is diluted to 1% (by weight) by mixing 32 mg thereof with 1.25 g of deionized water.

The aqueous solutions containing europium and copper are stirred moderately, and the diluted polymer E and polymer D solutions are added separately (in amounts adjusted to obtain 100% by stoichiometry of polymer D or E) to one of the two volumetric flasks.

The mixtures are kept stirring for 60 sec and precipitates are seen to form. Stirring is stopped and the suspensions are left to settle naturally for 60 min. The solutions obtained are filtered (0.45 μ Sartorius filter) to perform a liquid-solid separation.

The filtrates are analysed by ICP-OES to measure the concentration of the elements europium and copper. The analysis of the filtrates during treatment is represented in Figure 7.

For polymers A and D, copper is effectively removed from the precipitate at and above 100% of stoichiometry. The europium content in the filtrates is equivalent. At high stoichiometry, however, polymer E allows the precipitate to be enriched in europium more effectively.

### Examples 16:

The operating conditions of Example 6 are repeated. The polymer E solution (Example 5) is diluted to 1% (by weight) by mixing 40 mg thereof with 1.41 g of deionized water.

The aqueous solution containing europium and copper is stirred moderately, and the diluted polymer E solution is added (amount adjusted to obtain 100% by stoichiometry of polymer E). The solution is stirred for 1 minute. 0.5 mL of an aqueous solution containing 1% of coagulant (PAC 18 (polyaluminium chloride, average molecular weight between 20 000 and 1 million daltons) is then added and the solution is stirred for 1 minute. Finally, 0.5 mL of a solution containing 0.5 g/L of anionic flocculant (Flopam® AN 934 VHM, average molecular weight greater than 1 million daltons) is added and the solution is left stirring for 1 minute.

The mixture is kept stirring at 200 rpm for 60 sec and then at 50 rpm for 5 min to form flocs.

Stirring is stopped and the suspension is left to settle naturally for 10 min. The solution obtained is filtered (0.45 μ Sartorius filter) to perform a liquid-solid separation.

The copper and europium contents in the solid and in the filtrate remain equivalent to those obtained in Example 6. However, the treatment times (sedimentation, liquid-solid separation) are shorter than those in Example 6.

### Claims

1. Process for separating one or more elements among the rare-earth elements from other metals of columns 4 to 14 of the Periodic Table of the Elements, in admixture in an aqueous solution **AS,** said process comprising at least the following successive steps:

   a) adding at least one polyethyleneimine-CS2 adduct in the form of a salt (PEI-CS2) to the aqueous solution **AS;**
   b) stirring the aqueous solution obtained in step a) for at least 1 minute;
   c) stopping the stirring and waiting at least 5 minutes for a suspension **S** to form;
   d) performing a liquid/solid separation on the suspension **S** to obtain an aqueous solution **L** predominantly containing the elements among the rare-earth elements initially present in the aqueous solution **AS.**

2. Process according to Claim 1, **characterized in that**, between steps b) and c), it contains the following successive steps:

   b1) adding to the aqueous solution obtained in step a) a water-soluble polymer **P** with an average molecular weight of between 20 000 and 1 million daltons and stirring for at least 1 minute,
   b2) adding to the solution obtained in step b1) a water-soluble polymer **P'** with an average molecular weight greater than 1 million daltons and stirring for at least 1 minute.

3. Process according to Claim 1, **characterized in that** the salt of the polyethyleneimine-CS2 adduct is a sodium salt.

4. Process according to the preceding claims, **characterized in that** the polyethyleneimine from which the polyethyleneimine-CS2 adduct in the form of a salt used in step a) originates contains between 15% and 65% primary amine functions, between 25% and 60% secondary amine functions and between 10% and 60% tertiary amine functions.

5. Process according to the preceding claims, **characterized in that** the polyethyleneimine from which the polyethyleneimine-CS2 adduct in the form of a salt used in step a) originates has a molecular weight of between 300 and 70 000 daltons.

**6.** Process according to the preceding claims, **characterized in that**, for step a), a composition containing two different polyethyleneimine-CS2 adducts in the form of a salt may be used.

**7.** Process according to the preceding claims, **characterized in that** the polyethyleneimine-CS2 adduct in the form of a salt is in aqueous solution at a concentration of between 0.5% and 60% by weight, the aqueous solution having a pH of between 10 and 14.

**8.** Process according to the preceding claims, **characterized in that**, after step d), the process comprises at least the following steps:

> e) adding to the aqueous solution **L** at least one polyethyleneimine-CS2 adduct in the form of a salt (PEI-CS2);
> f) stirring the aqueous solution obtained in step d) for at least 1 minute;
> g) stopping the stirring and waiting at least 5 minutes for a suspension **S'** to form;
> h) performing a liquid/solid separation on suspension **S'** to obtain a solid **SO** predominantly containing the elements among the rare-earth elements initially present in solution **L.**

**9.** Process according to the preceding claims, **characterized in that** the solution **AS** contains at least two elements among the rare-earth elements.

**10.** Process according to the preceding claims, **characterized in that** the rare-earth metals in the solution **AS** are chosen from the following elements: neodymium, dysprosium, lanthanum, gadolinium, europium, yttrium, cerium and samarium.

**11.** Process according to the preceding claims, **characterized in that** the metals in columns 4 to 14 of the Periodic Table are iron, copper, chromium, manganese, cobalt, nickel, zinc, cadmium, mercury, tin, lead, vanadium, aluminium, gallium, selenium and molybdenum.

**12.** Process according to the preceding claims, **characterized in that**, for step a), the polyethyleneimine-CS2 adduct in the form of a salt (PEI-CS2) is the product of the reaction of a polyethyleneimine with carbon disulfide, with a molar proportion of carbon disulfide/sum of the amine groups present in the polyethyleneimine of between 0.5 and 1.1.

**13.** Process according to the preceding claims, **characterized in that**, for step a) of the process, the stoichiometric dose corresponding to the ratio between the anionic charge density of the polyethyleneimine-CS2 adduct in the form of a salt (PEI-CS2) and the total cationic charge density of the metal elements in the solution **AS** is between 80% and 120%.

**14.** Process according to Claim 8, **characterized in that**, for step e) of the process, the stoichiometric dose corresponding to the ratio between the anionic charge density of the polyethyleneimine-CS2 adduct in the form of a salt (PEI-CS2) and the total cationic charge density of the metal elements in the solution **AS** is between 200% and 500%.

[FIG 1]

[FIG 2]

Polymer E, chelation on europium/copper

EP 4 660 333 A1

[FIG 3]

Polymer E, chelation on yttrium/iron solution

[FIG 4]

Polymer B, chelation on neodymium/mercury solution

[FIG 5]

Polymer C, chelation on dysprosium/mercury solution

[FIG 6]

Polymer A and E, chelation on europium/copper solution

[FIG 7]

Polymer D and E, chelation on europium/copper

Europäisches
Patentamt

European
Patent Office

Office européen
des brevets

# EUROPEAN SEARCH REPORT

**Application Number**

EP 25 18 0260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2018 370 142 A1 (II VI DELAWARE INC [US]) 14 May 2020 (2020-05-14)<br>* paragraph [0052] - paragraph [0053] *<br>* paragraph [0127] - paragraph [0129] *<br>* claims 1 - 19 * | 1-14 | INV.<br>C22B3/42<br>C22B7/00<br>C22B59/00<br>B01J45/00<br>C02F101/20 |
| X | US 2019/078175 A1 (XU WEN-QING [US] ET AL) 14 March 2019 (2019-03-14)<br>* paragraph [0052] *<br>* claim 1 à 19 * | 1-14 | C02F1/56<br>C02F101/10 |
| A | US 7 030 205 B2 (NAT STARCH CHEM INVEST [US]) 18 April 2006 (2006-04-18)<br>* examples 7,9 * | 1-14 | |
| A | WO 2014/034296 A1 (HITACHI LTD [JP]) 6 March 2014 (2014-03-06)<br>* the whole document * | 1-14 | |
| A | WO 2023/079055 A1 (COMMISSARIAT ENERGIE ATOMIQUE [FR]; CENTRE NAT RECH SCIENT [FR] ET AL.) 11 May 2023 (2023-05-11)<br>* the whole document * | 1-14 | **TECHNICAL FIELDS SEARCHED (IPC)**<br>C22B<br>C02F |
| A | US 2020/308669 A1 (OGATA TAKESHI [JP] ET AL) 1 October 2020 (2020-10-01)<br>* the whole document * | 1-14 | B01J |
| A | CN 116 465 703 A (DAQING XINCHEN OILFIELD TECHNICAL SERVICE CO LTD) 21 July 2023 (2023-07-21)<br>* the whole document * | 1-14 | |
| A | US 5 766 478 A (SMITH BARBARA F [US] ET AL) 16 June 1998 (1998-06-16)<br>* the whole document * | 1-14 | |

-/--

The present search report has been drawn up for all claims

| Place of search | Date of completion of the search | Examiner |
|---|---|---|
| The Hague | 24 July 2025 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  ...........................................................................

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 18 0260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/101316 A1 (THOMPSON III SAMUEL JOHN [US] ET AL) 30 March 2023 (2023-03-30) * the whole document * ----- | 1-14 | |
| A | JHA MANIS KUMAR ET AL: "Review on hydrometallurgical recovery of rare earth metals", HYDROMETALLURGY, ELSEVIER SCIENTIFIC PUBLISHING CY. AMSTERDAM, NL, vol. 165, 27 August 2016 (2016-08-27), pages 2-26, XP029701438, ISSN: 0304-386X, DOI: 10.1016/J.HYDROMET.2016.01.035 * the whole document * ----- | 1-14 | |
| A | WO 2023/164058 A1 (VIRGINIA TECH INTELLECTUAL PROPERTIES INC [US]) 31 August 2023 (2023-08-31) * the whole document * ----- | 1-14 | |
| A | MWEWA BRIAN ET AL: "Recovery of rare earth elements from acid mine drainage: A review of the extraction methods", JOURNAL OF ENVIRONMENTAL CHEMICAL ENGINEERING, vol. 10, no. 3, 13 April 2022 (2022-04-13) , page 107704, XP093070700, NL ISSN: 2213-3437, DOI: 10.1016/j.jece.2022.107704 * the whole document * ----- | 1-14 | **TECHNICAL FIELDS SEARCHED** (IPC) |
| A | WO 2024/030853 A2 (NIOCORP DEV LTD [US]) 8 February 2024 (2024-02-08) * the whole document * ----- | 1-14 | |

The present search report has been drawn up for all claims

| Place of search | Date of completion of the search | Examiner |
|---|---|---|
| The Hague | 24 July 2025 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

**page 2 of 2**

EP 4 660 333 A1

## ANNEX TO THE EUROPEAN SEARCH REPORT
## ON EUROPEAN PATENT APPLICATION NO.

EP 25 18 0260

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2025

| Patent document cited in search report | | Publication date | Patent family member(s) | | Publication date |
|---|---|---|---|---|---|
| AU 2018370142 | A1 | 14-05-2020 | AU | 2018370142 A1 | 14-05-2020 |
| | | | CN | 111492073 A | 04-08-2020 |
| | | | CN | 116445750 A | 18-07-2023 |
| | | | EP | 3710607 A1 | 23-09-2020 |
| | | | WO | 2019099859 A1 | 23-05-2019 |
| US 2019078175 | A1 | 14-03-2019 | NONE | | |
| US 7030205 | B2 | 18-04-2006 | AT | E437907 T1 | 15-08-2009 |
| | | | EP | 1302493 A2 | 16-04-2003 |
| | | | US | 2003083456 A1 | 01-05-2003 |
| WO 2014034296 | A1 | 06-03-2014 | JP | 2014043634 A | 13-03-2014 |
| | | | WO | 2014034296 A1 | 06-03-2014 |
| WO 2023079055 | A1 | 11-05-2023 | CN | 118103533 A | 28-05-2024 |
| | | | EP | 4177365 A1 | 10-05-2023 |
| | | | EP | 4426871 A1 | 11-09-2024 |
| | | | JP | 2024540426 A | 31-10-2024 |
| | | | KR | 20240104092 A | 04-07-2024 |
| | | | US | 2024417826 A1 | 19-12-2024 |
| | | | WO | 2023079055 A1 | 11-05-2023 |
| US 2020308669 | A1 | 01-10-2020 | AU | 2018353702 A1 | 30-04-2020 |
| | | | JP | 7001903 B2 | 20-01-2022 |
| | | | JP | 2019077906 A | 23-05-2019 |
| | | | US | 2020308669 A1 | 01-10-2020 |
| | | | WO | 2019078368 A1 | 25-04-2019 |
| CN 116465703 | A | 21-07-2023 | NONE | | |
| US 5766478 | A | 16-06-1998 | AT | E252413 T1 | 15-11-2003 |
| | | | AU | 5958496 A | 18-12-1996 |
| | | | DE | 69630448 T2 | 22-07-2004 |
| | | | EP | 0828552 A1 | 18-03-1998 |
| | | | ES | 2213177 T3 | 16-08-2004 |
| | | | JP | 3810438 B2 | 16-08-2006 |
| | | | JP | H11506501 A | 08-06-1999 |
| | | | US | 5766478 A | 16-06-1998 |
| | | | WO | 9638220 A1 | 05-12-1996 |
| US 2023101316 | A1 | 30-03-2023 | AU | 2020208422 A1 | 29-07-2021 |
| | | | CA | 3125764 A1 | 23-07-2020 |
| | | | CN | 113474300 A | 01-10-2021 |
| | | | EP | 3911606 A1 | 24-11-2021 |
| | | | EP | 4321247 A2 | 14-02-2024 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 18 0260

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2025

| Patent document cited in search report | Publication date | Patent family member(s) | | Publication date |
|---|---|---|---|---|
| | | JP | 7514842 B2 | 11-07-2024 |
| | | JP | 2022517332 A | 08-03-2022 |
| | | KR | 20210105436 A | 26-08-2021 |
| | | US | 2023101316 A1 | 30-03-2023 |
| | | WO | 2020150457 A1 | 23-07-2020 |
| WO 2023164058 A1 | 31-08-2023 | US | 2025188222 A1 | 12-06-2025 |
| | | WO | 2023164058 A1 | 31-08-2023 |
| WO 2024030853 A2 | 08-02-2024 | AU | 2023320330 A1 | 20-02-2025 |
| | | US | 2025179613 A1 | 05-06-2025 |
| | | WO | 2024030853 A2 | 08-02-2024 |

EPO FORM P0459

For more details about this annex : see Official Journal of the European Patent Office, No. 12/82

page 2 of 2